# EUROPEAN PATENT APPLICATION

(11) **EP 4 290 113 A1**
(43) Date of publication of application: **13.12.2023**
(21) Application number: 22206137.6
(22) Date of filing: 08.11.2022
(51) Int. Cl.: F16L 37/40, F16L 37/084, F16L 37/098, F16K 15/18, B01D 35/153, B01D 24/10, B01D 35/16

(54) **VALVE ACTUATING DEVICE, ASSEMBLY INCLUDING A VALVE AND A VALVE ACTUATING DEVICE, LIQUID CONTAINER, AND METHOD FOR OPENING A VALVE**

(30) Priority: 09.06.2022 CN 202210653932
(71) Applicant: Waterdrop Technology Co., Ltd., Qingdao, Shandong (CN)
(72) Inventor: Zou, Zhibin, Qingdao (CN)
(74) Representative: Grünecker Patent- und Rechtsanwälte PartG mbB

(57) **Abstract**

The present disclosure relates to the field of a valve, in particular, to a valve actuating device (100), an assembly including a valve and a valve actuating device, a liquid container and a method for opening a valve. The valve actuating device (100) is mountable on a valve, which comprises a valve seat (902) and a valve body (901), wherein the valve seat (902) is provided with a through hole, and the valve body (901) is disposed on the through hole, wherein the valve actuating device (100) comprises: a body (101) having a top end and at least one suspension device (103) disposed on the top end and configured to penetrate through the through hole in the valve seat (902).

## Description

### TECHNICAL FIELD

The present disclosure relates to the field of a valve, in particular, to a valve actuating device, an assembly including a valve and a valve actuating device, a liquid container and a method for opening a valve.

### BACKGROUND

At present, water after water treatment cannot meet a drinking standard, and still needs to be filtered. Water filtration is a method specialized in the treatment of water, i.e., a method for removing suspended solids from the water by using a filter medium to obtain fresh water.

It is required to use a water filtration device for water filtration, which has a liquid container for collecting unfiltered liquid and is provided with an outlet at the bottom thereof. In the outlet region, a cartridge through which the liquid has to flow before flowing out of the liquid container is disposed. Herein, it is divided into a gravity-driving system and a pressure-driving system. Each of the gravity driving system and the pressure driving system has a corresponding cartridge and a liquid container with a corresponding connector.

In a gravity driving filtration system, the liquid container is used to collect an unfiltered water that is typically positioned in a bottom region of the liquid container, a filtering core is disposed in the liquid container, the bottom of the liquid container is provided with a discharge port, in this way, filtered water flowing out below the filtering core may flow into a collection container below the liquid container. The discharge port is generally provided with a valve to prevent the unfiltered water from directly flowing into the collection container to contaminate filtered pure water when the filter cartridge is not mounted.

In the prior art, the actuating of the valve is realized by means of a spiral axial movement, the structure is complicated, it is necessary to operate from inside of the liquid container to implement the opening of the valve; the operation is complicated, and it is easy to cause secondary pollution to the liquid container.

### SUMMARY

A primary object of the present disclosure is to overcome at least one of the above-mentioned defects of the prior art, and to provide a valve actuating device that has a simple structure, is easy for operation, can realized the rapid separation of a valve seat and a valve body, and facilitate the smooth flow of the liquid in the liquid container.

To achieve the above object, the following technical solutions are adopted.

The present invention relates to a valve actuating device which is mountable on a valve. The valve includes a valve seat and a valve body, the valve seat is provided with through holes, and the valve body is disposed on the through holes. The valve actuating device includes a body having a top end, and at least one suspension device disposed on the top end and configured to penetrate through the through hole in the valve seat.

According to some embodiments of the present invention, when the suspension device penetrates through the through hole in the valve seat, the suspension device is configured to suspend the body under the valve, optionally under the valve seat, further optionally under the through hole, and separate the valve body completely or at least partially from the valve seat to allow the liquid to flow through the valve.

According to some embodiments of the present invention, the suspension device includes a claw. The claw includes a protrusion and a connecting arm, the connecting arm has one end connected to the top end of the body and the other end on which the protrusion is disposed, and the protrusion is for snapping on the valve seat and separates the valve body completely or at least partially from the valve seat to allow the liquid to flow through the valve.

According to some embodiments of the present invention, one of the valve actuating device is provided, wherein the protrusion includes a hook.

According to some embodiments of the present invention, the connecting arm has an outer wall, and the hook has a first slope which is at an obtuse angle with the outer wall of the connecting arm and a second slope extending from the first slope along a direction away from the connecting arm. Optionally, the second slope is configured to be engaged on an upper surface of the valve seat adjacent to the through hole, to suspend the body under the valve, optionally under the valve seat, and further optionally under the through hole when the suspension device penetrates through the through hole.

According to some embodiments of the present invention, the hook includes a first plane perpendicular to the connecting arm and a second slope extending from the first plane along the direction away from the connecting arm. Optionally, the first plane is configured to be engaged on an upper surface of the valve seat adjacent to the through hole, to suspend the body under the valve, optionally under the valve seat, and further optionally under the through hole when the suspension device penetrates through the through hole.

Optionally, the second slope is configured to cooperate with the through hole or the upper surface of the valve seat adjacent to the through hole, so that the connecting arm is elastically deformed when the hook protrudes downwardly into the through hole.

According to some embodiments of the present invention, a chamfer is provided at a connection position between the first plane and the connecting arm.

According to some embodiments of the present invention, the protrusion includes a tab that extends from the outer wall along a horizontal direction facing away from the body. Optionally, the tab may include an arc face protruding from the outer wall along a horizontal direction facing away from the main body, particularly a semicircular or hemispheric convex face.

According to some embodiments of the present invention, the body is provided with a liquid channel. Optionally, the liquid channel is disposed in a center of the body. Optionally, the suspension device includes a plurality of claws. Optionally, the plurality of claws is disposed at an upper edge of the liquid channel and arranged along a circumferential direction of the liquid channel. Optionally, the top end includes a flow guide surface inclined toward the liquid channel and disposed between the plurality of claws. When the valve is opened, the liquid may be guided through the glow guide surface and flows out through the liquid channel to reduce or avoid coming into contact with the outer surface of the body.

According to some embodiments of the present invention, the valve actuating device is composed of the body and one to six of the claws.

Optionally, the body has a height of 1.5-58mm. Optionally, the connecting arm has a length of 2-58mm. Optionally, the hook has a height of 0.5-6mm in a direction of the connecting arm. Optionally, the body and/or the suspension device are/is made of materials with Shore hardness D40-D90. Optionally, the body and/or the suspension device are/is composed of one or more materials of PP, PE, ABS, and nylon. Optionally, the valve actuating device, the body and/or the suspension device are integrally formed.

According to a further aspect of the invention, an assembly including a valve and a valve actuating device is provided. The valve actuating device is one of the valve actuating devices according to the afore-mentioned embodiments. The valve includes a valve seat and a valve body, the valve seat is provided with through holes, the valve body is disposed on the through holes. When the suspension device penetrates through the through hole in the valve seat, the suspension device is configured to suspend the body under the valve and separate the valve body completely or at least partially from the valve seat to allow the liquid to flow through the through hole in the valve seat; and when the suspension device does not penetrate through the through hole in the valve seat, the valve body is configured to impede the liquid from flowing through the through hole in the valve seat. Optionally, the suspension device is configured to only separate the valve body completely or at least partially from the valve seat along the direction of the through hole. Optionally, the suspension device is configured to not rotate the valve body horizontally.

According to some embodiments of the present invention, the assembly is provided including the valve and the valve actuating device according to the aforementioned embodiments. The valve body is rotatable with respect to the through hole to open or close the valve, and when the valve body is rotatable with respect to the through hole at a closed position, the valve body moves along a direction away from the through hole to allow the liquid to flow through the through hole in the valve seat. Optionally, the rotation is a helical rotation, and a rotation axis is parallel along the direction of the through hole.

Optionally, the distance between the first plane and the top end is greater than the length of the through hole. As such, there is a certain distance between the top end of the body and the bottom of the valve seat, so that liquid can flow out of the gap formed between the top end and the bottom of the valve seat. Optionally, the claws have the same number as the through holes, and are positioned corresponding to the through holes. Optionally, when the claw penetrates through the through hole in the valve seat, there is a gap between the outer wall of the connecting arm and the inner wall of the through hole. Optionally, the gap is greater than 0.5mm, which enables the liquid to flow out between the connecting arm and the through hole. Optionally, the number of the claws is less than or equal to the number of the through holes in the valve seat. Optionally, the liquid channel is located under the through holes without the corresponding claws, which is more convenient for the liquid flows out of the through hole. Optionally, the claws all have the same height to separate the valve body completely from the valve seat.

According to some embodiments of the present invention, the assembly including the valve and the valve actuating device according to the aforementioned embodiments, the valve actuating device and the valve are configured to separate the valve actuating device from the valve when a force that is not less than 0.01, 0.05, or 0.1 N at and/or not greater than 2, 5, 10, or 50 N is applied along a direction facing away from the valve on the body. Optionally, the suspension device penetrates through the through hole in the valve seat when a force that is not less than 0.01, 0.05, or 0.1 N and/or not greater than 2, 5, 10, or 50 N is applied along a direction of the valve on the body.

Optionally, for the valve actuating device according to some embodiments of the present invention, a distance between the first plane and the top surface is greater than a length of the through hole. Optionally, the valve actuating device is one of the valve actuating devices according to the aforementioned embodiments, the claws have the same number as the through holes, and are positioned corresponding to the through holes.

According to some embodiments of the present invention, a liquid container is provided, including one of the assembly including the valve and the valve actuating device according to the aforementioned embodiments, the valve is mounted on a bottom of the liquid container.

According to another aspect of the present invention, an method for opening a valve is provided. The valve is mounted on a bottom of a liquid container, the valve includes a valve seat and a valve body, the valve seat is provided with through holes. The method includes:
providing a valve actuating device, the valve actuating device including a body and at least one suspension device, the body having a top end, and the at least one suspension device being disposed on the top end;
passing the at least one suspension device through the through holes in the valve seat from the below, so that the valve body is lifted upward to drive the valve body to be completely or at least partially separated from the valve seat, thereby opening the valve; and
suspending the body under the valve, optionally under the valve seat, further optionally under the through hole, by the suspension device.

Optionally, the valve actuating device is one of the valve actuating devices according to the aforementioned embodiments. Optionally, the assembly including the valve and the valve actuating device is one of the assemblies including the valve and valve actuating device according to the aforementioned embodiments.

Optionally, the at least one suspension device passes through the through hole of the valve seat from the liquid container upward. Optionally, the valve body is lifted upward in the axial direction of the liquid container. Optionally, the at least one suspension device passes through the through hole of the valve seat in the axial direction of the liquid container and lifts the valve body upward in the axial direction of the liquid container. Optionally, the valve body is lifted upward by the suspension device.

Optionally, the method further includes: applying a downward force to the body to remove the at least one of the suspension devices from the through holes, thereby closing the valve. Optionally, the method further includes rotating the valve body with respect to the valve seat, optionally in a horizontal direction, further optionally helically, thereby opening and/or closing the valve.

Optionally, the valve actuating device, the assembly including the valve and the valve actuating device, the liquid container, and the method for opening the valve are applicable to a water filtration device, particularly a gravity-driven water filtration system. The liquid container is used to collect unfiltered water, and in which a filter element is received, and has a discharge port at the bottom. The discharge port is provided with the valve to prevent unfiltered water from passing through the discharge port when the filter element is not installed. Optionally, the valve body may drive the valve through a helical axial movement.

According to some embodiments of the present invention, a valve actuating device is provided. The valve actuating device is mountable on a valve. The valve includes a valve seat and a valve body, the valve seat is provided with through holes, and the valve body is disposed on the through holes. The valve actuating device includes a body having a top end; at least one claw disposed on the top end, through the through holes, and engaged with the valve seat such that the valve body is completely or at least partially separated from the valve seat.

Optionally, the claw includes a protrusion and a connecting arm, the connecting arm has one end connected to the top end of the body and the other end on which the protrusion is disposed, and the protrusion is configured to clamp on the valve seat.

Optionally, the protrusion is a hook.

Optionally, the connecting arm has an outer wall, and the hook has a first slope which is at an obtuse angle with the outer wall of the connecting arm and a second slope extending from the first slope along a direction away from the connecting arm.

Optionally, the hook includes a first plane perpendicular to the connecting arm and a second slope extending from the first plane along the direction away from the connecting arm.

Optionally, a distance between the first plane and the top end is greater than a length of the through hole.

Optionally, a chamfer is provided at a connection position between the first plane and the connecting arm.

Optionally, the protrusion is a tab, the connecting arm has an outer wall, and the tab extends from the outer wall along a horizontal direction facing away from the body.

Optionally, the body is provided with a liquid channel, the valve actuating device comprises a plurality of claws, the plurality of claws are disposed at an upper edge of the liquid channel and arranged along a circumferential direction of the liquid channel, the top end includes a flow guide surface inclined toward the liquid channel, the flow guide surface is disposed between the plurality of claws.

Optionally, the valve actuating device is composed of the body and one to six of the claws.

Optionally, the connecting arm has an outer wall, and when the claw penetrates through the through hole in the valve seat, there is a gap between the outer wall of the connecting arm and an inner wall of the through hole.

Optionally, the number of the claws is less than the number of the through holes in the valve seat.

According to some embodiments of the present invention, an assembly including a valve and a valve actuating device is provided. Wherein the valve actuating device above mentioned is included. The valve includes a valve seat and a valve body, the valve seat is provided with through holes, the valve body is disposed on the through holes and is completely or at least partially separated from the valve seat, and the claw is able to penetrate through the through holes and engage with the valve seat, such that the valve body is completely or at least partially disassembled from the valve seat.

Optionally, when the claw penetrates through the through hole, the claw suspends the body under the valve seat, when the claw does not penetrate through the through hole in the valve seat, the valve body closes the through hole.

Optionally, the valve body is rotatable with respect to the through hole to open or close the valve, and when the valve body is rotatable with respect to the through hole at a closed position, the claw moves the valve body along a direction away from the through hole.

According to some embodiments of the present invention, a liquid container is provided. The liquid container includes the assembly including a valve and a valve actuating device, the valve is mounted on a bottom of the liquid container.

According to some embodiments of the present invention, an method for opening a valve is provided. The valve is mounted on a bottom of a liquid container, the valve includes a valve seat and a valve body, the valve seat is provided with through holes, and the valve body is disposed on the through holes. The method includes:
providing a valve actuating device, the valve actuating device including a body and at least one claw, the body having a top end, and the at least one claw being disposed on the top end;
passing the at least one claw through the through holes from the liquid container upward so that the valve body is lifted upward to drive the valve body to be completely or at least partially separated from the valve seat, thereby opening the valve; and
suspending the body under the valve seat by the claw.

Optionally, the method further includes:
applying a downward force to the body to remove at least one of the suspension devices from the through holes, thereby closing the valve; and/or
rotating the valve body with respect to the valve seat, particularly in a horizontal direction, thereby opening the valve.

In view of the above technical solutions, the valve actuating device, the assembly including the valve and the valve drive device, the liquid container and the method for opening the valve as proposed in the present disclosure have the following advantages and positive effects.

The body as proposed in the present disclosure, on one hand, functions as carrying the claws, and when the valve actuating device is used, the body can be held by hand to operate; on the other hand, when the body is operated by the hand, the movement of the claws can also be driven. The claw penetrates through the through hole in the valve seat and is engaged with the valve seat, to drive the valve under the valve actuating device without additional fixing, so as to perform actuating conveniently, quickly, and reliably. The present disclosure is simple in structure and easy in operation, can quickly separate the valve seat and the valve body, and facilitate the liquid smoothly flowing out of the liquid container and thereby avoiding secondary pollution.

### BRIEF DESCRIPTION OF THE DRAWINGS

The above and other features and advantages of the present disclosure will become more apparent by describing in detail exemplary embodiments thereof with reference to the accompanying drawings.
Fig. 1 is a schematic structure view of a valve actuating device of the present disclosure, in which a protrusion of a hanger is a hook.
Fig. 2 is a schematic structure view of the valve actuating device of the present disclosure in another direction.
Fig. 3 is a front view of the valve actuating device of the present disclosure.
Fig. 4 is a left view of Fig. 3.
Fig. 5A is a top view of Fig. 3.
Fig. 5B is a bottom view of Fig. 3.
Fig. 6 is a schematic structure view showing that a protrusion of the hook of the present disclosure is a tab.
Fig. 7 is a schematic structure view of a second embodiment of the valve actuating device of the present disclosure.
Fig. 8 is a schematic structure view of a third embodiment of the valve actuating device of the present disclosure.
Fig. 9 is a front view of a valve driven by the valve actuating device of the present disclosure.
Fig. 10 is a cross-sectional view taken along line A-A of Fig. 9.
Fig. 11 is a bottom view of Fig. 9.
Fig. 12 is a schematic structure view of a valve body of the valve as shown in Fig. 9.
Fig. 13 is a schematic structure view of the valve body of the valve as shown in Fig. 9 from another angle.
Fig. 14 is a front view of the valve body of the valve as shown in Fig. 9.
Fig. 15 is a schematic structure view of the valve seat of the valve as shown in Fig. 9.
Fig. 16 is a schematic structure view of the valve seat of the valve as shown in Fig. 9 from another angle.
Fig. 17 is a front view of the valve seat of the valve as shown in Fig. 9.
Fig. 18 is a schematic structure view of a liquid container without installing the valve actuating device of the present disclosure.
Fig. 19 is a cross-sectional view taken along the line B-B in Fig. 18.
Fig. 20 is a top view of Fig. 18.
Fig. 21 is an enlarged view at I of Fig. 19.
Fig. 22 is a schematic structure view of a liquid container with installing the valve actuating device of the present disclosure.
Fig. 23 is a cross-sectional view taken along the line C-C in Fig. 22.
Fig. 24 is a top view of Fig. 22.
Fig. 25 is an enlarged view at II of Fig. 23.
wherein reference numerals are indicated as follows:
100-valve actuating device;
101-body;
102-top end;
103-claw;
104- flow guide surface;
201-liquid channel;
301-hook;
302-connecting arm;
401-first plane;
402-second slope;
403 - outer wall;
601 - tab;
701 - first slope;
801 - chamfer;
900-valve;
901-valve body;
902-valve seat;
1101-through hole;
1800 - liquid container;
1900 - container wall.

### DETAILED DESCRIPTION

Typical embodiments embodying features and advantages of this disclosure will be set forth below in detail.

Hereinafter, various exemplary embodiments of the present disclosure will be described with reference to the drawings constituting a part of the present disclosure, in which different exemplary structures, systems, and steps of various aspects of the present disclosure can be realized in an exemplary example. It should be understood that other specific technical solutions of the components, structures, exemplary devices, systems, and steps may be used and can be structurally and functionally modified without departing from the scope of the present disclosure.

Specific embodiments of the present disclosure will be described in detail below with reference to the accompanying drawings in order to make the above objects, features, and advantages of the present disclosure clearly understood.

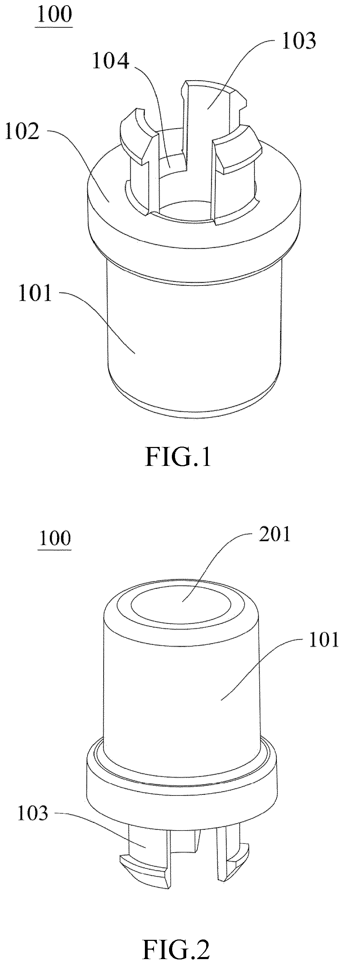

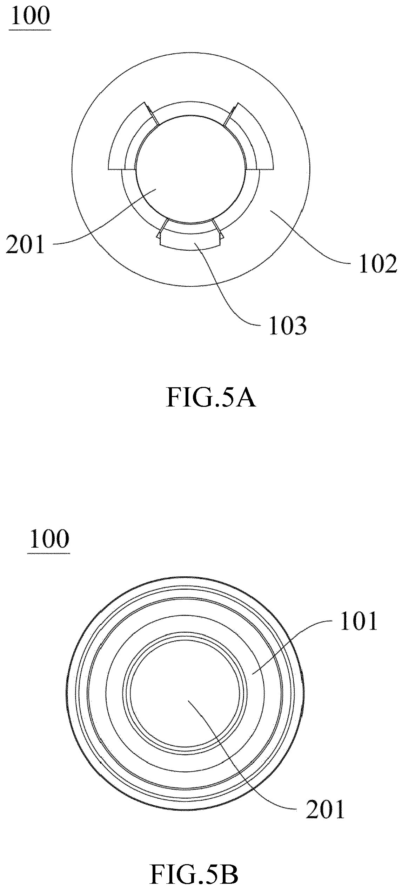

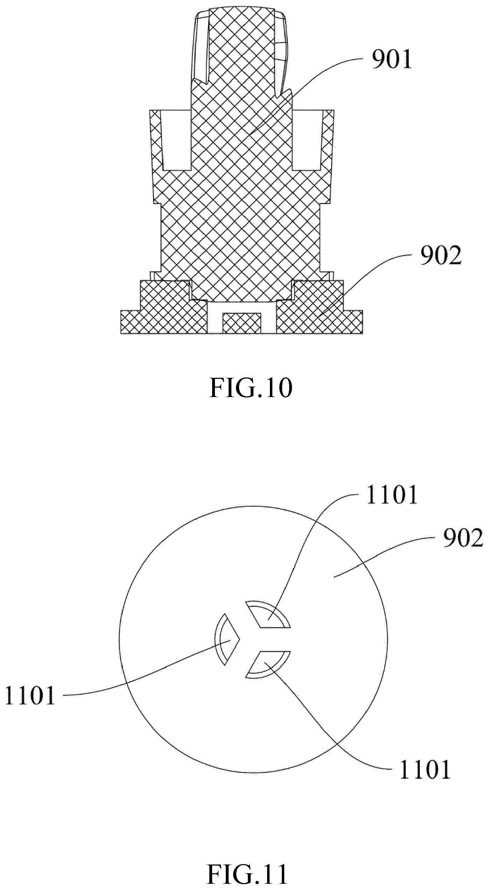

As shown in Figs. 1 to 6 and Figs. 9 to 11, a valve actuating device 100 of the present disclosure is mounted on a valve 900. The valve 900 includes a valve body 901, on which a through hole 1101 is disposed, and a valve seat 902, on which the valve body 901 is disposed. The valve driving device 100 includes a body 101 and at least one claw 103. The body 101 has a top end 102 for carrying the claw 103. The claw 103 is disposed on the top end 102 and hung on the valve seat 902 through the through hole 1101 on the valve seat 902, and the claw 103 separates the valve body 901 from the valve seat 902. When the valve actuating device is used, a user's hand holds the body 101 for operation. The claw 103 is connected to the body 101 via the top end 102 so that the user's hand can move the claw 103 together when the body 101 is operated. The body 101 is driven by the user's hand, and thus the claw 103 is driven to pass through the through hole 1101 on the valve seat 902, to allow the claw 103 to lift the valve body 901 disposed on the valve seat 902 upward, such that the valve body 901 is separated from the valve seat 902, and the liquid can flow out of a gap formed after separating the valve seat 902 from the valve body 901.

The valve actuating device 100, the claw 103 and/or the body 101 may be made of a material of a certain elasticity, for example, PP, PE, ABS, nylon, etc. The claw and the body may be integrally formed. The number of the claws may be in plural, for example two, three, five, etc. In this embodiment, the number of the claws 103 is three arranged at an interval of 120°. The claws 103 are distributed to form a virtual cylinder with a center line of the body 101 as an axis. Alternatively, one or two of the claws 103 may be substituted for a support column having no hanging function to completely or partially separate the valve seat 902 from the valve body 901.

In this embodiment, the number of the through holes 1101 on the valve seat 902 is also three, which is the same as the number of the claws 103; the three through holes 1101 are fan-shaped and arranged at intervals of 120 °; and the arc-shaped inner walls of the through holes 1101 are on the same circumference and correspond to the positions of the claws 103. Since the valve is generally a rotary body, three through holes 1101 are provided in a fan shape and are disposed at the upper edge of the liquid channel 201 and arranged along a circumferential direction of the liquid channel 201, so as to more conveniently engage with the claw 103 of the valve actuating device 100 of the present disclosure. That is, the arrangement position of the through hole 1101 and the arrangement position of the claw 103 are related to each other, correspond to each other, and influence each other.

The top end 102 includes a flow guide surface inclined toward the liquid channel 201, and the flow guide surface is disposed between a plurality of claws 103.

In this embodiment, as shown in Fig. 2, the liquid channel 201 through which the liquid flows is disposed in a center of the body 101. In some other embodiments, the liquid channel 201 may not be provided, as long as the liquid may be allowed to flow out.

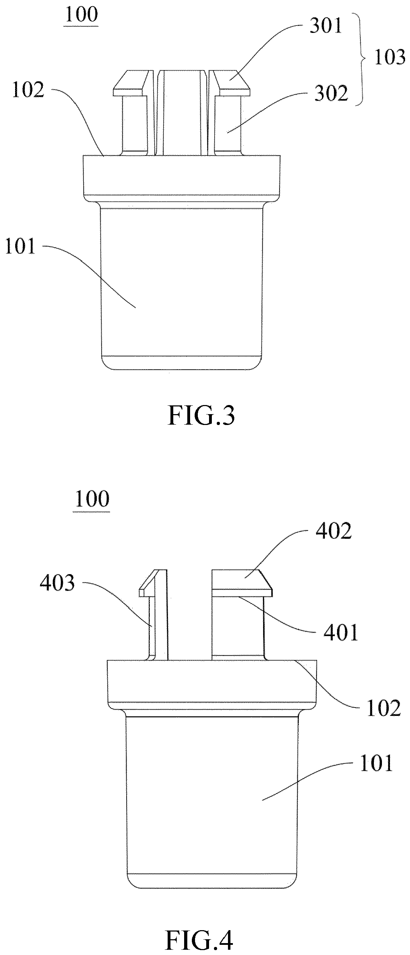

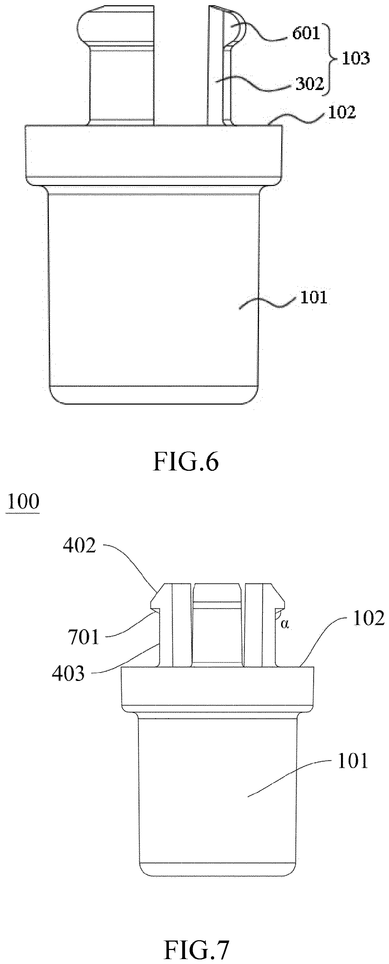

In this embodiment, as shown in Fig. 3, the claw 103 includes a protrusion and a connecting arm 302. The protrusion includes a hook 301, and in some other embodiments, also includes a tab 601 (as shown in Fig. 6). The tab may include an arc face protruding from an outer wall along a horizontal direction facing away from the body 101, especially a semicircular or hemispherical convex face. The connecting arm 302 has one end connected to the top end 102 of the body 101, and the other end on which the hook 301 is arranged. The hook 301 is snapped on the valve seat 902. The hook 301 is configured to mainly enable the claw 103 to engage with a valve seat face of the valve seat 902 around the through hole 1101 through the through hole 1101 on the valve seat 902. Since the hook has a certain height to lift the valve body 901 such that the valve body 901 cannot contact the valve seat 902, thereby forming a gap. The connecting arm 302 is configured to mainly connect the hook 301 and the body 101. The same portions of a plurality of claws 103 are distributed on a virtual section of a virtual cylinder to form a plurality of circles with different diameters.

In this embodiment, as shown in Fig. 4, the hook 301 includes a first plane 401 perpendicular to the connecting arm 302 and a second slope 402 extending from the first plane 401 along a direction away from the connecting arm 302. Since an inner wall face of the through hole 1101 on the valve seat 902 is perpendicular to the valve seat face of the valve seat 902 opposite to the valve body 901, the hook 301 is provided with the first plane 401 perpendicular to the connecting arm 302, it can be realized that the claw 103 engages with the valve seat face of the valve seat 902 around the through hole 1101 and opposite to the valve body 901 through the through hole 1101 in the valve seat 902, to lift the valve body 901 such that the liquid flows out from the gap formed after the valve seat 902 is separated from the valve body 901. The hook 301 is provided with a second slope 402 extending from the first plane 401 along a direction away from the connecting arm 302, which can play a guiding role when the claw 103 passes through the through hole 1101 in the valve seat 902. Since the first plane 401 of the hook 103 is required, the claw 103 engages with the valve seat face of the valve seat 902 around the through hole 1101 and opposite to the valve body 901 through the through hole 1101 in the valve seat 902, a diameter of a circle formed by a portion connecting the second slope 402 and the first plane 401 is slightly larger than a diameter of a circle formed by an arc-shaped inner wall of the through hole 1101 in the valve seat 902. The second slope 402 extends away from the connecting arm 302, so that a diameter of a circle formed by a top end position of the hook 301 is smaller than a diameter of a circle formed by the arc-shaped inner wall of the through hole 1101 in the valve seat 902, and the claw 103 thus can smoothly penetrate the through hole 1101 in the valve seat 902.

In this embodiment, a distance between the first plane 401 of the hook 301 and the top end 102 of the body 101 is greater than a length of the through hole 1101. It is realized that there is a certain distance between the top end 102 of the body 101 and the bottom of the valve seat 902, so that the liquid can flow out from the gap formed between the top end 102 of the body 101 and the bottom of the valve seat 902.

In this embodiment, the body 101 is in a cylindrical shape, and the claws 103 are evenly distributed on the top end 102 of the body 101, which is advantageous for manual operation and simple process. The body 101 may also be provided to have triangular, quadrangular, and hexagonal shapes, etc. The top end 102 formed on the body 101 is used to limit a moving distance of the claw 103 when the claw 103 passes through the through hole1101 in the valve seat 902. When the top end 102 contacts the bottom of the valve seat 902, it means that the hook 301 of the claw 103 has completely passed through the through hole 1101 in the valve seat 902, such that the first plane 401 of the hook 301 of the claw 103 is snapped on the valve seat 902, thereby separating the valve body 901 from the valve seat 902, and the liquid can flow out from the gap formed after the valve seat 902 is separated from the valve body 901.

In this embodiment, the connecting arm 302 of the claw 103 has an outer wall 403. When the claw 103 penetrates through the through hole 1101 in the valve seat 902, there is a gap between the outer wall 403 of the connecting arm 302 and the arc-shaped inner wall of the through hole 1101. It is realized that the liquid flows out of the gap formed as described above.

As shown in Fig. 7, in a second embodiment of the valve actuating device 100 of the present disclosure, the valve actuating device 100 includes a body 101 and at least one claw 103. The claw 103 includes a hook 301 and a connecting arm 302. The connecting arm 302 is disposed on a top end 102, and the hook 301 is disposed on the connecting arm 302. The connecting arm 302 has an outer wall 403. The hook 301 includes a first slope 701 forming an obtuse angle α with the outer wall 403 of the connecting arm 302 and a second slope 402 extending from the first slope 701 along a direction away from the connecting arm 302. The first slope 701 is configured to mainly grasp the body 101 by a hand to pull down the valve actuating device 100 while disassembling the valve actuating device 100. Under the guidance of the first slope 701, due to the elasticity of the claw, the connecting arm 302 drives the hook 301 to gather toward a center of the valve actuating device so that the hook 301 can be moved downward from the through hole 1101 in the valve seat 902 so as to disassemble the valve actuating device 100 from the valve 900.

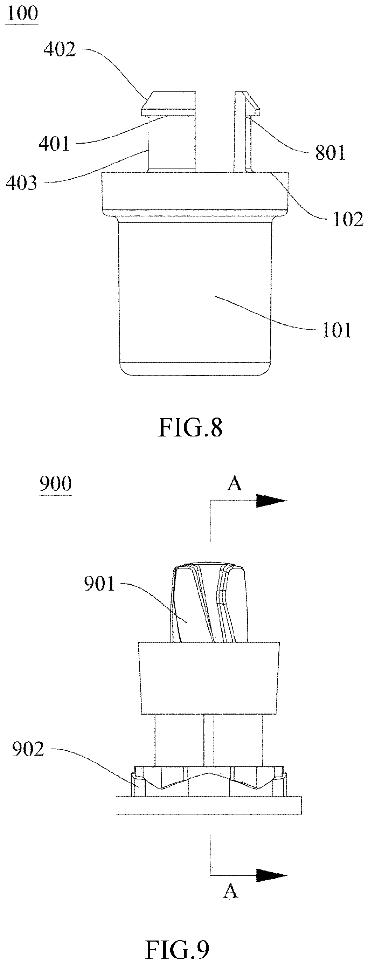

As shown in Fig. 8, in a third embodiment of the valve actuating device 100 of the present disclosure, the valve actuating device 100 includes a body 101 and at least one claw 103. The claw 103 includes a hook 301 and a connecting arm 302. The connecting arm 302 is disposed on a top end 102. The hook 301 is disposed on the connecting arm 302. The hook 301 includes a first plane 401 perpendicular to the connecting arm 302 and a second slope 402 extending from the first plane 401 along a direction away from the connecting arm 302. A chamfer 801 is provided at a connection position between the first plane 401 and the connecting arm 302. The chamfer 801 is configured to mainly grasp the body 101 by a hand to pull down the valve actuating device 100 while disassembling the valve actuating device 100. Under the guidance of the chamfer 801, due to the elasticity of the claw, the connecting arm 302 drives the hook 301 to gather to a center of the valve actuating device so that the hook 301 can be moved downward from the through hole 1101 in the valve seat 902 so as to disassemble the valve actuating device 100 from the valve 900.

In some other embodiments, the number of the through holes 1101 in the valve seat 902 is greater than the number of the claws 103. In this way, when the claw 103 passes through the through hole 1101 in the valve seat 902 to lift the valve body 901, the liquid may flow out from other through holes 1101 without claws.

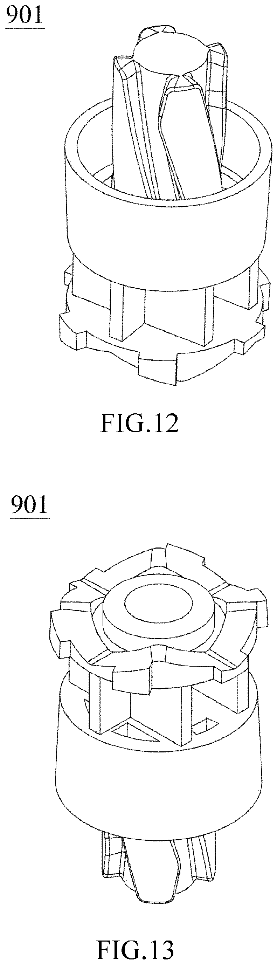

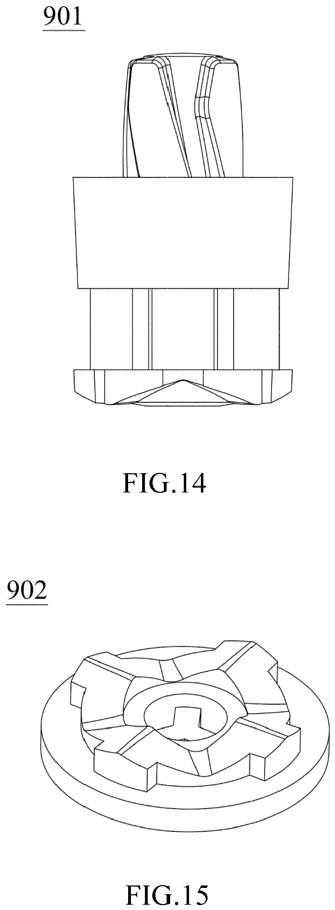

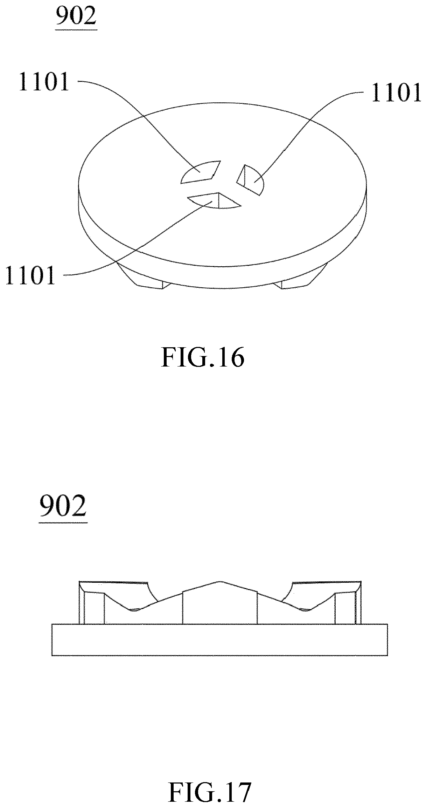

As shown in Figs. 12 to 17, specific structures of the valve body 901 and the valve seat 902 of the valve 900 driven by the valve actuating device 100 of the present disclosure is shown. The valve seat 902 has a generally cylindrical shape, and the valve body 901 has a mating surface to the valve seat 902, which corresponds in shape to at least one section of a conical side surface. The valve body 901 has an axial end forming an adjustment of the valve body 901 that can selectively impede the flow of liquid through the through hole 1101 in the valve seat 902, that is, when the valve actuating device 100 is not mounted, the surface of the valve body 901 is in contact with the valve seat 902, to impede the liquid from flowing through the through hole 1101 in the valve seat 902; and when the valve actuating device 100 is inserted into a valve cavity through the through hole 1101 in the valve seat 901, the hook 301 of the claw 103 lifts the valve body 901 axially upward, thereby separating the surface of the valve body 901 from the valve seat 902, and allowing the liquid to flow through the through hole 1101 in the valve seat 901.

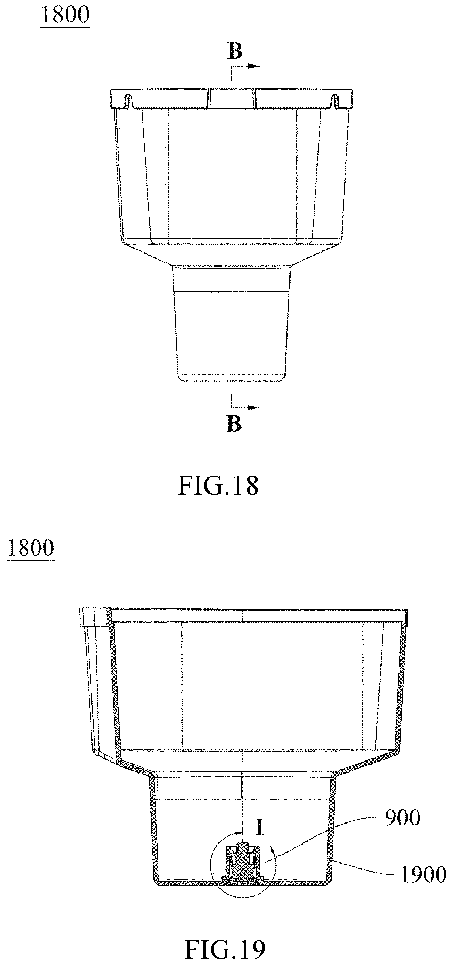

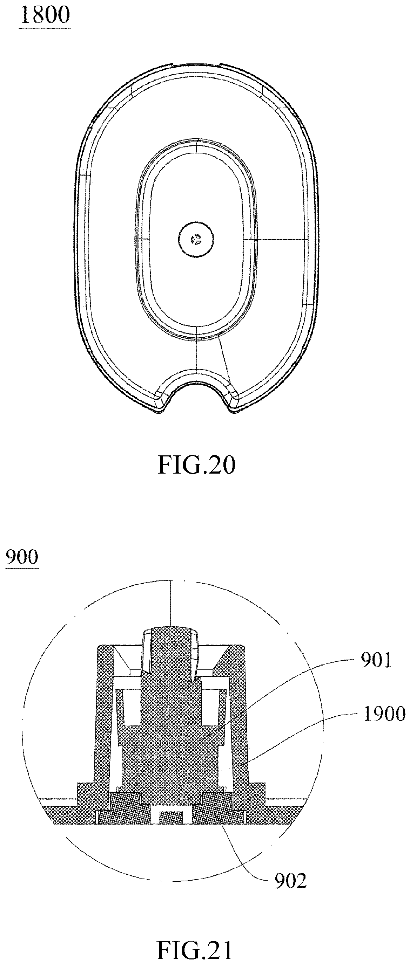

As shown in Figs. 18-21, a liquid container 1800 includes a container wall 1900 and a bottom-mounted valve 900 that is mounted to the bottom of the liquid container 1800 by the conventional means. The valve 900 is not provided with a valve actuating device 100. In this embodiment, the valve seat 902 is made of the same material as the container wall 1900 of the liquid container 1800 to bond the valve seat 902 to the container wall 1900 of the liquid container 1800 by welding, for example, an ultrasonic welding. The valve body 901 in this embodiment lacks a closing gap, and is made of a material having a density greater than that of water, which ensures that it does not float when being submerged in water.

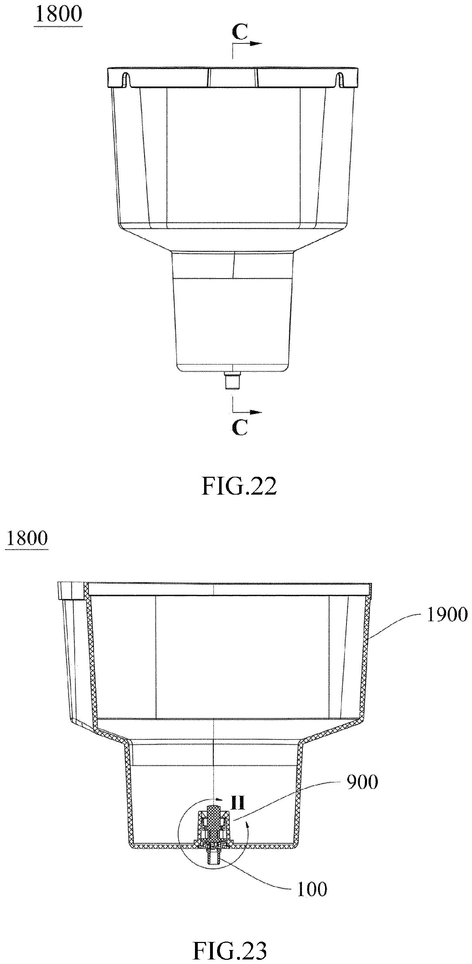

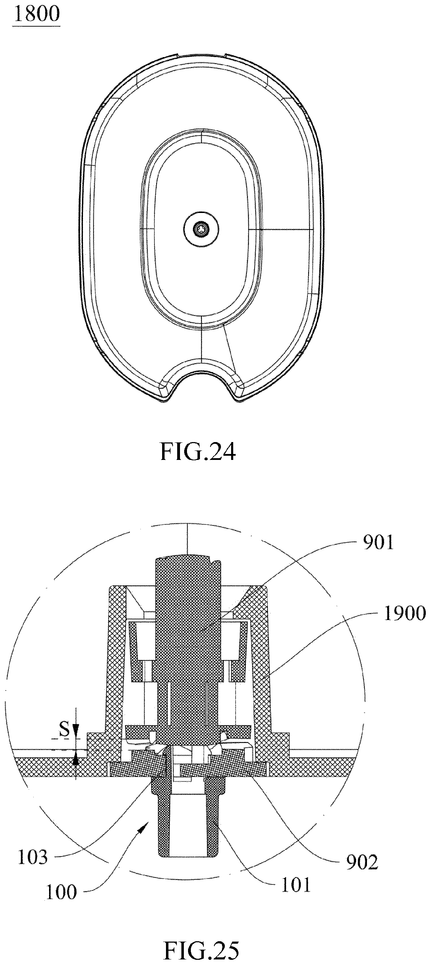

As shown in Figs. 22 to 25, the liquid container 1800 includes a container wall 1900 and a bottom-mounted valve 900, wherein the valve 900 is mounted with the valve actuating device 100. It can be seen from the figures that the hook 301 of the claw 103 of the valve actuating device 100 can engage with the valve seat face of the valve seat 902 around the through hole 1101 through the through hole 1101 in the valve seat 902. Since the hook has a certain height to lift the valve body 901, the valve body 901 and the valve seat 902 create a distance S therebetween, that is, a gap. In this embodiment, the body 101 is provided with a liquid channel 201 through which the liquid can flow. In some other embodiments, a distance between a first plane 401 of the hook 301 and a top end 102 of the body 101 is greater than a length of the through hole 1101, and the liquid can flow out of a gap formed between the top end 102 of the body 101 and the bottom of the valve seat 902.

It should be noted here that the valve actuating devices as shown in the drawings and described in this description are but a few examples of various types of valve actuating devices capable of using a principle of the present disclosure. It should be clearly understood that the principle of the present disclosure is by no means limited to any details or any components of the valve actuating devices as shown in the drawings or described in this description.

The above refers to a detailed description of several exemplary embodiments of the valve actuating device as proposed in the present disclosure, and the following will exemplify an method for opening the valve as proposed in the present disclosure.

In conjunction with Figs. 1 to 25, the present disclosure provides an method for opening the valve, the above-mentioned valve is mounted at the bottom of a liquid container 1800, by using the above-mentioned valve actuating device 100, the valve actuating device 100 passes through the through hole 1101 of the valve seat 902 in an axial direction of the liquid container 1800, the valve body 901 is lifted upward in the axial direction of the liquid container 1800, and the valve body 901 is driven to separate from the valve seat 902, thereby opening the valve 900. It is realized that the valve can be opened from the outside of the liquid container, and the liquid in the liquid container flows out, to avoid secondary pollution.

In use, the valve actuating device 100 is mounted on the valve 900, the valve 900 includes a valve body 901 and a valve seat 902, in which the valve seat 902 is provided with a through hole 1101, and the valve body 901 is disposed on the valve seat 902. The valve actuating device 100 includes a body 101 and three claws 103. The body 101 has a top end 102, and the claw103 is arranged on the top end 102, to allow the human hand to grasp the body 101 and push the valve actuating device 100 upward in the axial direction of the liquid container 1800 from the bottom of the liquid container 1800. At this time, since the claw 103 includes a hook 301 and a connecting arm 302, the hook 301 includes a second slope 402, and the claw 103 is made of a material of a certain elasticity, so that under the guidance of the second slope 402, the claw 103 can engage with the valve seat face of the valve seat 902 around the through hole 1101 through the through hole 1101 in the valve seat 902. Since the hook has a certain height to lift the valve body 901, so that the valve body 901 cannot be in contact with the valve seat 902, thereby forming a gap S through which the liquid can flow.

In addition, by applying a downward force to the body 101, the claw 103 can be removed from the through hole, such that the valve body 901 comes into contact with the valve seat 902, thereby closing the valve. In addition, the valve body 901 includes threads on an upper part thereof. The valve body 901 can be rotated relative to the valve seat 902 by pressing a device with a corresponding helical face or a slope, thereby providing a way to open the valve from a side facing away from the valve seat.

The valve actuating device 100 of the present disclosure needs not to be disassembled after mounted in the liquid container 1800. When there is no water in the liquid container, a filter element is mounted in the liquid container and then water is injected into the liquid container for filtration; and when the filter element needs to be replaced, the water in the liquid container is discharged and the filter element is directly replaced.

When dissembling is required, such design of the valve actuating device as shown in Fig. 7 or Fig. 8 can be adopted, the valve actuating device 100 can be pulled down by grasping the body 101 by the hand, under the guidance of the first slope 701 or the chamfer 801, since the claw has a certain elasticity, the connecting arm 302 drives the hook 301 to gather toward the center of the valve actuating device, so that the hook 301 can move downward from the through hole 1101 of the valve seat 902 to disassemble the valve actuating device 100 from the valve 900. The valve seat can also be processed slightly, for example, the engagement between the valve seat 902 and the claw 103 is designed as a slope with a certain inclination, and the slope itself has a guidance for the hook, so that it is not necessary that the first slope 701 or the chamfer 801 is disposed on the valve actuating device100; when disassembling, the valve actuating device 100 can be pulled down by grasping the body 101, under the guidance of the slope at the engagement of the valve seat 902 and the claw 103, since the claw has a certain elasticity, the connecting arm 302 drives the hook 301 to gather toward the center of the valve actuating device, so that the hook 301 can move downward from the through hole 1101 of the valve seat 902 to disassemble the valve actuating device 100 from the valve 900 .

As shown in Figs. 1 to 25, the valve actuating device 100 of the present disclosure is mounted on a valve 900 to form a valve. The valve has the valve actuating device 100 of the present disclosure. The valve having the valve actuating device 100 of the present disclosure is mounted to the bottom of the liquid container to form a liquid container, which has the above-mentioned valve.

By means of the method for opening the valve of the present disclosure as described above, it can be determined that the valve actuating device of the present disclosure includes a body and at least one claw. The body is configured to function as carrying the claw, and when the valve actuating device is used, the body is held by the hand for operation. The body has a top end, and the claw is disposed on the top end. The claw is connected to the body through the top end, so that when the body is operated by the hand, the movement of the claw can also be driven. The valve actuating device of the present disclosure is mounted on a valve, the valve includes a valve seat and a valve body, the valve seat is provided with through holes, and the valve body is disposed on the valve seat. The claw penetrates through the through holes in the valve seat to directly drive the valve body to be separated from the valve seat. It is possible to drive the body by the hand, and then drive the claw, to penetrate through the through hole in the valve seat, so that the claw lifts the valve body disposed on the valve seat, so as to realize the separation of the valve body and the valve seat, and the liquid thus can flow out of the gap formed after separating the valve seat from the valve body. The disclosure has a simple structure and a convenient operation, can quickly separate the valve seat from the valve body, which is advantageous to the smooth outflow of the liquid in the liquid container, the opening of the valve from the outside of the liquid container, and to avoid secondary pollution. In addition, the valve actuating device of the present disclosure can pass through the valve seat from the bottom of the liquid container in the axial direction of the liquid container, and lift the valve body upward in the axial direction of the liquid container, thereby opening the valve such that the liquid flows out, which is convenient for disassembly and assembly and avoid coming into contact with the inside of the liquid container.

The method for opening the vale as proposed in the present disclosure, the valve 900 is mounted at the bottom of the liquid container 1800, the valve 900 includes the valve seat 902 and the valve body 901, the valve seat 902 is provided with the through holes 1101, and the valve body 901 is disposed on the through holes 1101, the method includes:

providing a valve actuating device 100, in which the valve actuating device 100 includes a body 101 and at least one claw 103, the body 101 has a top end 102, and the at least one claw 103 is disposed on the top end 102; at least one claw 103 passes through the through hole 1101 below the liquid container 1800, so that the valve body 901 is lifted upward to drive the valve body 901 to be completely or at least partially separated from the valve seat 902, thereby opening the valve 900; and suspending the body 101 under the valve seat 902 by the claw 103. In addition, the method may further include applying a downward force to the body 101, to remove at least one of the claw 103 from the through hole 1101, thereby closing the valve 900; and/or rotating the valve body 901 in the horizontal direction with respect to the valve seat 902, thereby opening the valve.

By using the above-mentioned valve actuating device, allowing the valve actuating device to pass through the through hole of the valve seat from the bottom of the liquid container in the axial direction of the liquid container, lifting the valve body upward in the axial direction of the liquid container, and actuating the valve body to be separated from the valve seat, thereby opening the valve. It is realized that the valve can be opened from the outside of the liquid container, so that the liquid in the liquid container flows out, to avoid the secondary pollution.

Exemplary embodiments of the valve actuating device and the method for opening the valve as proposed by the present disclosure are described and/or illustrated in detail. However, the embodiments of the present disclosure are not limited to the specific embodiments as described herein. Rather, the constituents and/or steps of each embodiment may be used independently and separately from the other constituents and/or steps as described herein. Each constituent and/or step of one embodiment may also be used in combination with other constituents and/or steps of the other embodiments. Words such as "one", "an/a", and "said" are used herein to indicate the presence of one or more elements/component parts/and others. Terms "including", and "having" have an inclusive meaning which means that there may be additional elements/component parts/and others in addition to the listed elements/component parts/and others.

The embodiments of the present disclosure are not limited to the specific embodiments as described herein. Rather, the constituents and/or steps of each embodiment may be used independently and separately from the other constituents and/or steps as described herein. Each constituent and/or step of one embodiment may also be used in combination with other constituents and/or steps of the other embodiments. In the description of this specification, the terms "one embodiment," "some embodiments," "other embodiments," etc. means that a particular feature, structure, material, or characteristic described in connection with the embodiment or example is included in at least one embodiment or example of the embodiments. In this specification, schematic representations of the above terms do not necessarily refer to the same embodiment or example. Furthermore, the particular features, structures, materials or characteristics described may be combined in any suitable manner in any one or more embodiments or examples.

The above are only preferred embodiments of the present disclosure, and are not intended to limit the embodiments of the present disclosure. For a person skilled in the art, the present disclosure may have various modifications and changes in the embodiments.

## Claims

1. A valve actuating device (100), which is mountable on a valve, which comprises a valve seat (902) and a valve body (901), wherein the valve seat (902) is provided with a through hole (1101), and the valve body (901) is disposed on the through hole (1101), wherein the valve actuating device (100) comprises:
a body (101) having a top end (102); and
at least one suspension device disposed on the top end (102) and configured to penetrate through the through hole (1101) in the valve seat (902).

2. The valve actuating device (100) according to claim 1, when the suspension device penetrates through the through hole (1101) in the valve seat (902), the suspension device is configured to suspend the body (101) under the valve, and separate the valve body (901) completely or at least partially from the valve seat (902) to allow the liquid to flow through the valve.

3. The valve actuating device (100) according to claim 1 or 2, wherein the suspension device comprises a claw (103), and the claw (103) comprises a protrusion and a connecting arm (302), the connecting arm (302) has one end connected to the top end (102) of the body (101) and the other end on which the protrusion is disposed, and the protrusion is for snapping on the valve seat (902) and separates the valve body (901) completely or at least partially from the valve seat (902) to allow the liquid to flow through the valve.

4. The valve actuating device (100) according to any one of claims 1 to 3, wherein the protrusion comprises a hook (301).

5. The valve actuating device (100) according to claim 4, wherein the connecting arm (302) has an outer wall (403), and the hook (301) has a first slope (701) which is at an obtuse angle with the outer wall (403) of the connecting arm (302) and a second slope (402) extending from the first slope (701) along a direction away from the connecting arm (302).

6. The valve actuating device (100) according to claim 4, wherein the hook (301) comprises a first plane (401) perpendicular to the connecting arm (302) and a second slope (402) extending from the first plane (401) along the direction away from the connecting arm (302).

7. The valve actuating device (100) according to claim 6, wherein a chamfer (801) is provided at a connection position between the first plane (401) and the connecting arm (302).

8. The valve actuating device (100) according to any one of claims 3-7, wherein the protrusion comprises a tab (601) that extends from the outer wall (403) along a horizontal direction facing away from the body (101); and
wherein the tab (601) may comprise an arc face protruding from the outer wall (403) along a horizontal direction facing away from the main body (101).

9. The valve actuating device (100) according to any one of claims 3-8, wherein the body (101) is provided with a liquid channel (201);
wherein the liquid channel (201) is disposed in a center of the body (101);
wherein the suspension device comprises a plurality of claws;
wherein the plurality of claws are disposed at an upper edge of the liquid channel (201) and arranged along a circumferential direction of the liquid channel (201); and
wherein the top end (102) comprises a flow guide surface (104) inclined toward the liquid channel (201) and disposed between the plurality of claws.

10. The valve actuating device (100) according to any one of claims 3-9, wherein the valve actuating device (100) is composed of the body (101) and one to six of the claws.

11. An assembly comprising a valve (900) and a valve actuating device (100), wherein the valve actuating device (100) is one of the valve actuating devices according to any one of claims 1-10, and the valve comprises a valve seat (902) and a valve body (901), the valve seat (902) is provided with through holes, the valve body (901) is disposed on the through holes;
when the suspension device penetrates through the through holes in the valve seat (902), the suspension device is configured to suspend the body (101) under the valve and separate the valve body (901) completely or at least partially from the valve seat (902) to allow the liquid to flow through the through holes in the valve seat (902);
when the suspension device does not penetrate through the through holes in the valve seat (902), the valve body (901) is configured to impede the liquid from flowing through the through holes in the valve seat (902);
wherein the suspension device is configured to only separate the valve body (901) completely or at least partially from the valve seat (902) along the direction of the through holes; and
wherein the suspension device is configured to not rotate the valve body (901) horizontally.

12. The assembly according to claim 11,
wherein the valve body (901) is rotatable with respect to the through holes to open or close the valve, and when the valve body (901) is rotatable with respect to the through holes at a closed position, the valve body (901) moves along a direction away from the through holes to allow the liquid to flow through the through holes in the valve seat (902);
wherein the rotation is a helical rotation, and a rotation axis is parallel along the direction of the through holes; and
wherein the distance between the first plane (401) and the top end (102) is greater than the length of the through holes.

13. The assembly including the valve (900) and the valve actuating device (100) according to claim 11 or 12, wherein the valve actuating device (100) and the valve are configured to separate the valve actuating device (100) from the valve when a force that is not less than 0.01 N at and/or not greater than 50 N is applied along a direction facing away from the valve on the body (101); and/or
wherein the valve actuating device (100) and the valve are configured so that the suspension device penetrates through the through holes in the valve seat (902) when a force that is not less than 0.01 N and/or not greater than 50 N is applied along a direction of the valve on the body (101).

14. A liquid container (1800) including the assembly according to any one of claims 11 to 13, wherein the valve (900) is mounted on a bottom of the liquid container (1800).

15. An method for opening a valve (900), wherein the valve (900) is mounted on a bottom of a liquid container (1800), the valve (900) includes a valve seat (902) and a valve body (901), the valve seat (902) is provided with through holes, wherein the method includes:
providing a valve actuating device (100), the valve actuating device (100) including a body (101) and at least one suspension device, the body (101) having a top end (102), and the at least one suspension device being disposed on the top end (102);
passing the at least one suspension device through the through holes in the valve seat (902) from the below, so that the valve body (901) is lifted upward to drive the valve body (901) to be completely or at least partially separated from the valve seat (902), thereby opening the valve; and
suspending the body (101) under the valve (900).
